# EUROPEAN PATENT SPECIFICATION

(11) **EP 2 284 052 B1**
(45) Date of publication and mention of the grant of the patent: **29.07.2015**
(21) Application number: 10167106.3
(22) Date of filing: 24.06.2010
(51) Int. Cl.: B60R 25/04, B60R 16/04

(54) **Anti-theft device and vehicle including the same**
Diebstahlsicherung und damit ausgerüstetes Fahrzeug
Dispositif antivol et véhicule le comportant

(30) Priority: 05.08.2009 JP 2009182077
(43) Date of publication of application: 16.02.2011
(73) Proprietor: Yamaha Hatsudoki Kabushiki Kaisha (Yamaha Motor Co., Ltd.), Shizuoka 438-8501 (JP)
(72) Inventor: Sugiyama, Yuichi, Shizuoka-ken Shizuoka 438-8501 (JP)
(74) Representative: Grünecker Patent- und Rechtsanwälte PartG mbB

(56) References cited:
- WO-A1-89/12343
- JP-A- 2003 063 330
- JP-A- 2003 319 567
- US-A- 5 563 576
- US-A- 5 736 793
- US-A1- 2005 181 837

## Description

The present invention relates to a device used to prevent vehicle theft, and more specifically to an anti-theft device preferably including a GPS (Global Positioning System) device and capable of measuring the present position of the vehicle. A vehicle according to the preamble of claim 1 is known from Japanese Patent No. 3901566.

Various types of anti-theft devices are provided in vehicles for the purpose of preventing vehicle theft. Recently, vehicles equipped with an anti-theft device including a GPS device and a radio communication device have been provided.

Japanese Patent No. 3901566 discloses a vehicle including an anti-theft device. The anti-theft device is fed by a vehicle-mounted battery (hereinafter referred to as a "main battery") when an engine is stopped. In a stolen vehicle, the present vehicle position is measured by a GPS device provided in the anti-theft device. The present positional information about the vehicle and information about the theft are transmitted to a monitoring center from the stolen vehicle by radio communication. A mobile phone communication network for example is used as the radio communication.

When a vehicle is stolen, and a power supply line connecting an anti-theft device and a main battery is cut, power is no longer supplied to the anti-theft device from a main battery. This also applies when the main battery becomes exhausted and the voltage level is lowered. When the power supply to the anti-theft device is disconnected, the function of the anti-theft device is substantially invalidated.

In order to solve the above-described problem, a second battery (hereinafter referred to as a "sub battery") is provided in the anti-theft device. In this way, if a power supply line connecting the anti-theft device and the main battery is cut, power supply to the anti-theft device is secured by the sub battery in the device, so that the location of the stolen vehicle can be specified.

The main battery is charged by the engine and the sub battery is charged by the main battery. When the engine is driven, the main battery has high voltage and sufficient capability of charging the sub battery. When the engine is stopped, the main battery runs down as it charges the sub battery. Therefore, in the disclosure of Japanese Patent No. 3901566, while an engine operation signal is not input, the sub battery is intermittently charged. In this way, the exhaustion of the main battery can be reduced.

According to Japanese Patent No. 3901566, however, while the main battery may be less exhausted, it still runs down with time.

When the main battery is exhausted in a stationary state, an engine starting motor cannot be activated at the start of the engine, and the engine may not be started.

An anti-theft device disclosed herein is a device driven with power supplied from a first battery that is charged by an engine started by an engine starting motor and includes a second battery, and a controller, and preferably a position measurement device, and a radio communication device. The second battery is charged by the first battery and supplies the anti-theft device with electric power when no electric power is supplied from the first battery to the anti-theft device. The controller stops charging to the second battery when voltage supplied from the first battery is reduced to less than a first threshold. The position measurement device measures the present position of the anti-theft device. The radio communication device is used to report the positional information measured by the position measurement device to a management center by radio communication.

It is an object of the present invention to provide an anti-theft device capable of operating for a long period while reducing the exhaustion of the main battery and securing the startability of the engine can be provided. Such an object is achieved by a vehicle according to claim 1.

Other features, elements, steps, characteristics and advantages of the present invention will become more apparent from the following detailed description of the preferred embodiments of the present invention with reference to the attached drawings.
Fig. 1 is an overall view of an anti-theft system including an anti-theft device.
Fig. 2 is a block diagram of an anti-theft device and electric components in a periphery of the anti-theft device.
Fig. 3 is a diagram of a peripheral structure of a generator.
Fig. 4 is a table showing a relation between a level of charging voltage of a main battery and a state of charge of a sub battery.

When a motorcycle is stolen, and a cable of an anti-theft device is pulled out or cut, power supply from a main battery to an anti-theft device is cut off. In this case, the sub battery allows the anti-theft device to be driven. Therefore, according to Japanese Patent No. 3901566, the sub battery is always charged intermittently while an engine is stopped. This allows the anti-theft device to be activated for a long period after the theft, so that the location of the stolen vehicle can be specified in the long period after the theft.

According to Japanese Patent No. 3901566, however, the sub battery is constantly charged wherever the engine is stopped. Therefore, if the motorcycle 1 is parked for a long period without being used, the main battery can be exhausted and the engine starting motor cannot be activated to start the vehicle.

The inventor of the present invention has paid attention to the fact that when the motorcycle 1 is parked at home, various anti-theft measures can be taken, while such measures are impossible to take when the motorcycle is parked on the street. More specifically, the motorcycle 1 could be stolen while it is parked on the street or a criminal can rob the motorcycle 1 from the rider on the street and ride away.

If the motorcycle 1 is stolen on the street, the main battery 12 has been charged sufficiently because the motorcycle 1 has traveled until the moment of stealing.

Therefore, in such a case, if supply of power to the anti-theft device 10 from the main battery 12 is cut off by the criminal, the sub battery 109 is in a sufficient state of charge. Therefore, the anti-theft device 10 can be activated for a long period after the theft, and the position of the stolen vehicle can be specified for the long period. Therefore, there is a high possibility of discovering the vehicle while the sub battery 109 of the anti-theft device still operates.

The inventor of the present invention has therefore come up with the idea of carrying out control so that charging to the sub battery 109 is stopped when voltage supplied from the main battery 12 is less than a first threshold. In this way, the voltage of the main battery 12 can be prevented from running down to such a level that the engine starting motor 52 cannot be activated, and therefore the startability of the engine can be secured. Furthermore, if the voltage of the main battery 12 is not less than the first threshold, in other words, if it is a short period after the engine is stopped or if the engine is in operation, the sub battery 109 is charged and therefore the anti-theft device operates for a long period after the vehicle is stolen. Therefore, there is a high possibility of discovering the vehicle.

As described above, an anti-theft device capable of operating for a long period after the vehicle theft while reducing the exhaustion of the main battery and securing the startability of the engine can be provided.

### 1. Overall Structure of Anti-theft System

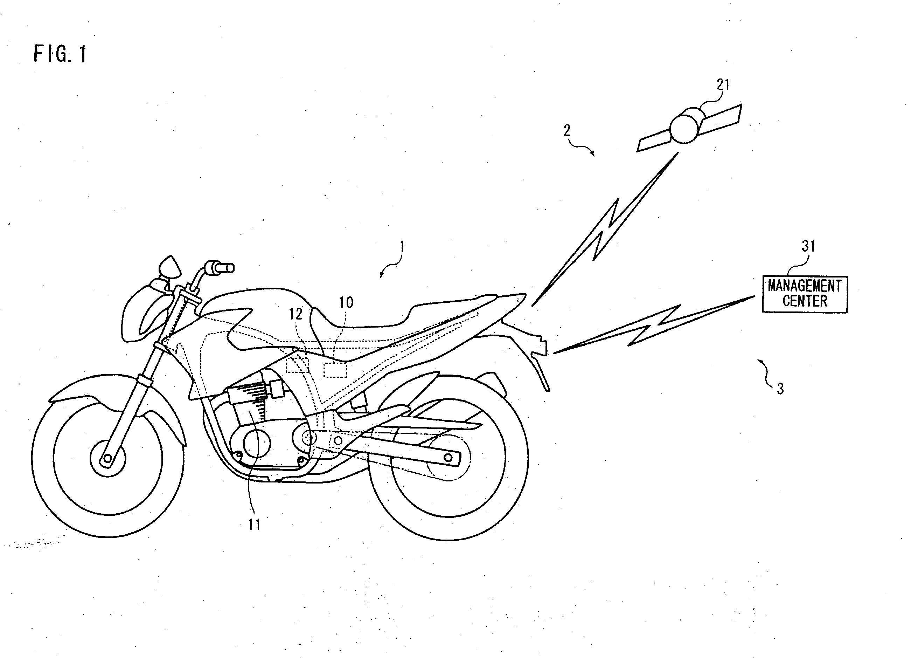

Now, the preferred embodiment of the present invention will be described in conjunction with the accompanying drawings. Fig. 1 is an overall view of an anti-theft system according to the preferred embodiment. The anti-theft system includes an anti-theft device 10 provided in a motorcycle 1, a GPS (Global Positioning System) satellite 21, a management center 31, and the like.

How the anti-theft system operates will be described. The anti-theft device 10 of the motorcycle 1 includes a GPS receiving function, receives signals transmitted from the GPS satellite 21 and can measure the present location of the anti-theft device 10. Since the anti-theft device 10 is provided in the motorcycle 1, it can measure the present location of the motorcycle 1.

The anti-theft device 10 has a radio communication function and can transmit the present positional information of the motorcycle 1 to the management center 31 by radio communication. According to the present preferred embodiment, GSM (Global System for Mobile Communication) is used as the radio communication.

When the motorcycle 1 is stolen, the rider of the motorcycle 1 immediately reports the fact to the management center 31 by telephone or the like. The management center 31 obtains positional information transmitted from the anti-theft device 10 provided in the motorcycle 1 and discovers the stolen vehicle.

### 2. Structure of Anti-theft Device and Peripheral Components

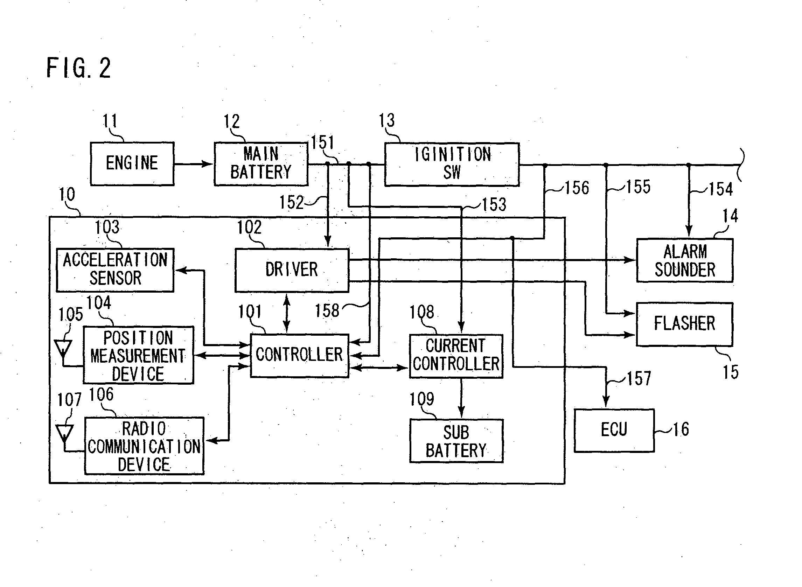

Fig. 2 is a block diagram of the anti-theft device 10 provided in the motorcycle 1 and electric components in a periphery of the anti-theft device 10.

The motorcycle 1 includes an anti-theft device 10, an engine 11, a main battery 12, an engine starting motor 52, an ignition switch 13, an alarm sounder 14, a flasher 15, and an ECU (Engine Control Unit) 16. A "first battery" according to the present invention corresponds to the "main battery 12" according to the present preferred embodiment.

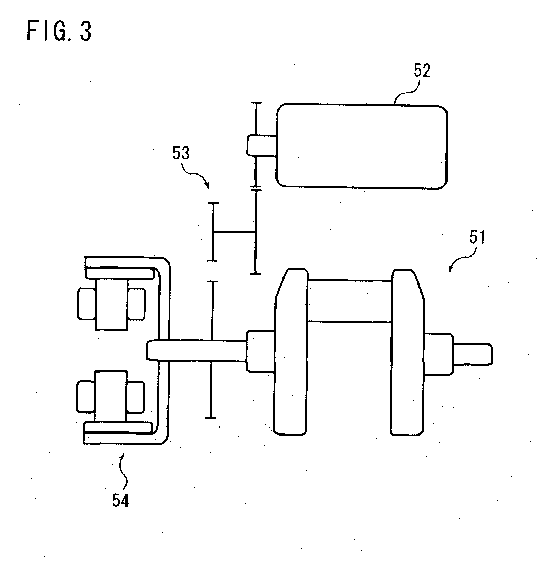

Fig. 3 is a view of a peripheral structure of a generator 54. The engine 11 has a crankshaft 51. When the engine starts, the engine starting motor 52 starts to rotate in response to the operation of the rider. As the engine starting motor 52 rotates, power is transmitted through a transmission mechanism 53 including a gear and other components, so that the crankshaft 51 starts to rotate. The crankshaft 51 rotates by explosive force by combustion in the cylinder of the engine 11. The generator 54 is provided at one end of the crankshaft 51. As the crankshaft 51 rotates, the generator 54 generates electric power. The generated electric power charges the main battery 12 provided in the vehicle.

The main battery 12 is charged by the engine 11. As the engine starting motor 52 rotates in response to the operation of the rider, the engine 11 is started. The engine starting motor 52 is supplied with electric power from the main battery 12. The main battery 12 is a vehicle mounted battery provided to supply electric power to various electric components provided in the motorcycle 1 other than staring the engine 11. The main battery 12 has for example a charging capability of 12 V.

A power supply line 151 connected to the main battery 12 is connected to the ignition switch 13. The power supply line 151 is connected with three power supply lines 152, 153, and 158. The power supply lines 152, 153, and 158 supply the anti-theft device 10 with electric power.

The alarm sounder 14 is connected to the downstream side of the ignition switch 13 through the power supply line 154. The flasher 15 is connected to the downstream side of the ignition switch 13 through the power supply line 155. The alarm sounder 14 receives electric power from the main battery 12 in response to the rider's operation and generates an alarm sound when the ignition switch 13 is on and the engine 11 is driven. The flasher 15 receives electric power from the main battery 12 and flashes in response to the rider's operation of instructing a direction indicator lamp or a hazard lamp to turn on when the ignition switch 13 is on and the engine 11 is driven.

The power supply line 156 is connected to the downstream side of the ignition switch 13. The power supply line 156 is provided inside the anti-theft device 10. The power supply line 156 is connected to the power supply line 157 in the anti-theft device 10. The power supply line 157 is connected to the ECU 16. The ECU 16 controls driving of the engine 11. In this way, in the motorcycle 1 according to the present preferred embodiment, the electric power of the main battery 12 is supplied to the ECU 16 via the wiring arranged through the anti-theft device 10.

The anti-theft device 10 includes a controller 101, a driver 102, an acceleration sensor 103, a position measurement device 104, and a radio communication device 106. Furthermore, the anti-theft device 10 includes a current controller 108 and a sub battery 109. A "second battery" according to the present invention corresponds to the "sub battery 109" according to the present preferred embodiment.

The controller 101 includes a microprocessor, a RAM (Random Access Memory), a ROM (Read Only Memory) and the like and controls the anti-theft device 10 as a whole. The controller 101 is connected with the above-described power supply line 158. The controller 101 receives power supply from the main battery 12 through the power supply line 158.

The driver 102 is connected with the above-described power supply line 152. The driver 102 supplies electric power supplied through the power supply line 152 to the alarm sounder 14 and the flasher 15. In this way, the alarm sounder 14 and the flasher 15 can be driven through the driver 102 even when the ignition switch 13 is off.

Although not shown, the acceleration sensor 103, the position measurement device 104, and the radio communication device 106 are supplied with electric power from the main battery 12.

The acceleration sensor 103 detects the acceleration in three directions, i.e., X-, Y-, and Z-directions. The acceleration sensor 103 outputs acceleration information in the X-, Y-, and Z-directions to the controller 101. The controller 101 detects an abnormality about the motorcycle 1 based on the acceleration information input from the acceleration sensor 103. For example, if the ignition switch 13 is in an off state and the inclination of the vehicle equal to or larger than a prescribed value is detected or if acceleration of at least a prescribed value is detected, the controller determines the occurrence of an abnormality.

The position measurement device 104 can function as a GPS receiver. A GPS antenna 105 is connected to the position measurement device 104. The GPS satellite 21 (Fig. 1), the position measurement device 104, and the GPS antenna 105 form a GPS system 2. The position measurement device 104 receives signals from the GPS satellite 21 and measures the present location of the anti-theft device 10. Stated differently, the measurement device 104 measures the present position of the motorcycle 1. The position measurement device 104 outputs the measured positional information to the controller 101.

The radio communication device 106 can function as a GSM radio device. A radio communication antenna 107is connected with the radio communication device 106. The management center 31 (Fig. 1), the radio communication device 106, and the radio communication antenna 107 form a GSM system 3. The radio communication device 106 carries out communication with the management center 31 shown in Fig. 1 through a radio base station for cell phones that is not shown. The controller 101 transmits the present positional information of the motorcycle 1 to the management center 31 using the radio communication device 106. Note however that the radio communication device according to the present invention is not necessarily limited to this arrangement.

The current controller 108 supplies electric power supplied through the power supply line 153 to the sub battery 109. The sub battery 109 supplies electric power to the controller 101, the accelerator sensor 103, the position measurement device 104, the radio communication device 106, and various electric components provided in the anti-theft device 10.

The controller 101 measures the charging voltage of the main battery 12 from the electric power supplied through the power supply line 153. The controller 101 determines whether or not to charge the sub battery 109 depending on the obtained charging voltage of the main battery 12. The method of determining whether or not to charge the sub battery 109 will be described later.

When the ignition switch 13 is in an off state and the motorcycle 1 is provided with vibration, the acceleration sensor 103 detects acceleration. The acceleration information is informed to the controller 101 from the acceleration sensor 103 and if the occurrence of an abnormality is determined, the controller 101 controls the alarm sounder 14 through the driver 102 and generates an alarm sound. The controller 101 also controls the flasher 15 through the driver 102 and has the hazard lamp turned on.

The controller 101 transmits the positional information to the management center 31 through the radio communication device 106 upon determining an abnormality. In this way, when the ignition switch 13 is in an off state and vibration is applied to the motorcycle 1, the anti-theft device 10 can be activated and the positional information can be transmitted to the management center 31.

### 3. Method of Charging Sub Battery

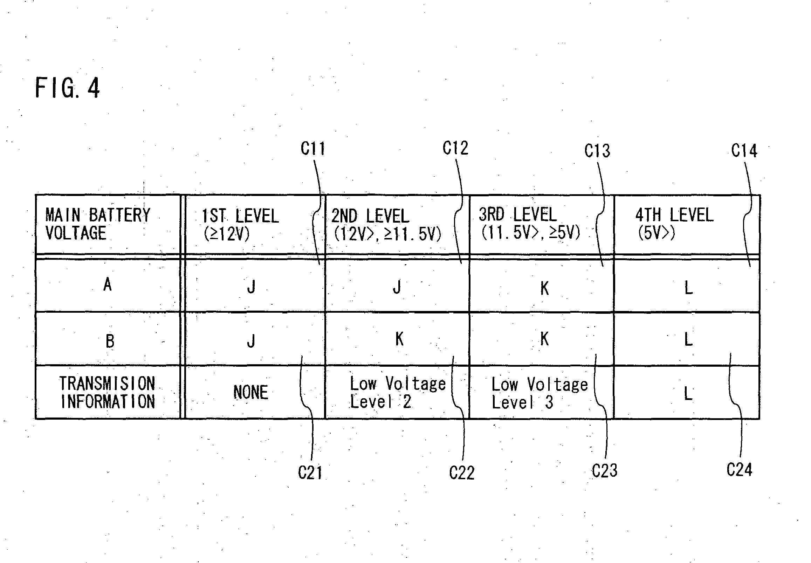

Now, referring to Fig. 4, the method of determining whether or not to charge the sub battery 109 will be described. Fig. 4 is a table showing the relation between the state of charge of the main battery 12 and the result of determining whether or not to charge the sub battery 109. Fig. 4 is a view of the relation between the state of charge of the main battery 12 and information transmitted to the management center 31.

In Fig. 4, the state of charge of the main battery 12 is divided into four levels. The charging voltage of the main battery 12 is at least 12 V in a first level, at least 11.5 V and less than 12 V in a second level, at least 5 V and less than 11.5 V in a third level, and less than 5 V in a fourth level.

A voltage of 12 V is set in order to prevent the main battery 12 from chattering and keep the sub battery 109 fully charged. A voltage of 11.5 V is set as a limit voltage for the main battery 12 to start the engine 11, in other words, as a limit voltage used to drive the engine starting motor 52. A voltage of 5 V is set as a voltage with which sufficient power for driving the anti-theft device 10 cannot supplied as the charging voltage of the main battery 12 is reduced.

According to the present invention, first, second, and third thresholds are previously set as thresholds for determining the state of the charging voltage of the main battery 12. The "first threshold" according to the present invention is 11.5 V in the present preferred embodiment. The "second threshold" according to the present invention is 12 V in the present preferred embodiment. The "third threshold" according to the present invention is 5 V in the present preferred embodiment. Note however that the numerical values in the present preferred embodiment are an example and it is only necessary that the relation represented by the "third threshold" < the "first threshold" < the "second threshold" is established, and the numerical values are not limited. According to the present invention, the first threshold needs only be set to a voltage level that can drive the engine starting motor 52.

Whether or not to charge the sub battery 109 is determined based on two cases. The first case is when the charging voltage of the main battery 12 tends to decrease. This case is indicated as case "A" in Fig. 4. The second case is when the charging voltage of the main battery 12 tends to increase. This case is indicated as case "B" in Fig. 4.

Here, the case in which the voltage tends to decrease corresponds to when the voltage changes from a high state to a low state. Stated differently, it refers to when the voltage of the main battery 12 runs down. When the engine 11 stops and no electric power is generated by the generator 54, the voltage of the main battery 12 runs down. When electric power is supplied for example to electric components from the main battery 12 while the engine 11 is in a stationary state, the voltage of the main battery 12 runs down. Besides, the main battery 12 has its voltage exhausted by self discharge.

Conversely, the case in which the voltage tends to increase corresponds to when the voltage changes from a low state to a high state. Stated differently, it is when the main battery 12 is in a charged state. When the engine 11 rotates and electric power is generated by the generator 54, the main battery 12 is charged. The voltage of the main battery 12 changes from a low state to a high state for example when the engine 11 is started after having been stopped for a long period and the voltage of the main battery 12 is reduced.

In Fig. 4, the sign "J" indicates that the controller 101 determines that the sub battery 109 is to be charged. The sign "K" indicates that the controller 101 determines that the sub battery 109 is not to be charged. The sign "L" indicates a sub battery mode.

In cases C11 and C21, the charging voltage of the main battery 12 is both at least 12 V. Stated differently, both in the cases C11 and C21, the charging voltage of the main battery 12 is not less than the second threshold. In this case, the controller 101 determines that the sub battery 109 is to be charged regardless of whether the level of charge of the main battery 12 tends to decrease or increase.

In the case C12, the charging voltage of the main battery 12 is at least 11.5 V and less than 12 V, and the charging voltage of the main battery 12 tends to decrease. Stated differently, in the case C12, the charging voltage of the main battery 12 is at least the first threshold and less than the second threshold, and the charging voltage of the main battery 12 tends to decrease. According to the present preferred embodiment, the transition of the level of the main battery 12 from the first level (at least 12 V) to the second level (at least 11.5 V and less than 12 V) is regarded as a decreasing tendency. In the case C12, the controller 101 determines that the sub battery 109 is to be charged.

In the case C22, the charging voltage of the main battery 12 is at least 11.5 V and less than 12 V, and the charging voltage of the main battery 12 tends to increase. Stated differently, in the case C22, the charging voltage of the main battery 12 is at least the first threshold and less than the second threshold, and the charging voltage of the main battery 12 tends to increase. According to the present preferred embodiment, the transition of the level of the main battery 12 from the third level (at least 5 V and less than 11.5 V) to the second level (at least 11.5 V and less than 12 V) is regarded as an increasing tendency. In the case C22, the controller 101 determines that the sub battery 109 is not to be charged.

In this way, even when the charging voltage of the main battery 12 is in the same second level, whether or not to charge the sub battery 109 is determined depending on whether the state of charging voltage tends to decrease or increase.

In the case C22, the charging voltage of the main battery 12 is raised from the third level to the second level. Since the level of charge of the main battery 12 was lowered to such a level that the engine 11 cannot be started, a sufficient charging period should be secured. Therefore, when the charge level tends to increase even in the second level, it is determined that the sub battery 109 is not to be charged.

Conversely, in the case C12, the charging voltage of the main battery 12 is dropped from the first level to the second level. The main battery 12 has sufficient charging voltage and therefore still has voltage more than necessary to start the engine 11. It is determined that the state of charge of the main battery 12 is good and that the sub battery 109 is to be charged. The charging to the sub battery 109 can be prevented from being stopped in response to minute changes in the charging voltage.

Both in cases C13 and C23, the charging voltage of the main battery 12 is at least 5 V and less than 11.5 V. Stated differently, both in the cases C13 and C23, the charging voltage of the main battery 12 is not less than the third threshold and less than the first threshold. In these cases, the controller 101 determines that the sub battery 109 is not to be charged regardless of whether the charging voltage of the main battery 12 tends to decrease or increase.

In the cases C13 and C23, the charging voltage of the main battery 12 is less than voltage necessary to start the engine 11. In this case, the charging to the sub battery 109 is stopped regardless of the state of the charging voltage of the main battery 102 in the past. Since the charging voltage of the main battery 12 is in a level not enough to start the engine, the main battery 12 must be prevented from being exhausted. The starting of the engine 11 by the main battery 12, in other words, the traveling of the motorcycle 1 has precedence in this control.

Both in the cases C14 and C24, the charging voltage of the main battery 12 is less than 5 V. In these cases, the controller 101 changes the mode of the anti-theft device 10 to the sub battery mode. More specifically, the controller 101 changes the mode of the anti-theft device 10 from the driving mode by the main battery 12 to the driving mode by the sub battery 109.

Assume that a criminal who tries to steal the motorcycle 1 pulls out or cut the cable of the anti-theft device 10. In this case, the controller 101 determines that the supply voltage of the battery 12 has changed to the fourth level. The controller 101 drives the anti-theft device 10 by the sub battery 109.

When the charging voltage of the main battery 12 is less than 5 V, not only the charging to the sub battery 109 is stopped but also the driving of the anti-theft device 10 by the main battery 12 is stopped. This is for the purpose of preventing the main battery 12 from further running down and the charging capability of the main battery 12 from being lowered in the fourth level.

In this way, according to the present preferred embodiment, the controller 101 determines whether or not to charge the sub battery 109 depending on the state of charge of the main battery 12 regardless of whether the engine 11 is driven or stopped.

### 4. Transmission of Charge Level Information

The third row in Fig. 3 indicates transmission information about the level of charge. The controller 101 does not transmit information to the management center 31 when the level of charge of the main battery 12 is in the first level (at least 12 V). Here, the first level is not less than the second threshold.

The controller 101 transmits second level information to the management center 31 when the level of charge of the main battery 12 is changed from the first level (at least 12 V) to the second level (at least 11.5 V and less than 12 V). The controller 101 transmits second level information to the management center 31 when the level of charge of the main battery 12 is changed from the third level (at least 5 V and less than 11.5 V) to the second level (at least 11.5 V and less than 12 V). The second level information is transmitted regardless of whether the state of charge of the main battery 12 tends to decrease or increase. When the level proceeds to the second level, the information to transmit may be different depending on whether the transition is downward transition or upward transition. Here, the second level is not less than the first threshold and less than the second threshold. The third level is not less than the third threshold and less than the first threshold.

The controller 101 transmits third level information to the management center 31 when the level of charge of the main battery 12 changes from the second level (at least 11.5 V and less than 12 V) to the third level (at least 5 V and less than 11.5 V). The controller 101 transmits the third level information to the management center 31 when the level of charge of the main battery 12 changes from the fourth level (less than 5 V) to the third level (at least 5 V and less than 11.5 V). The third level information is transmitted regardless of whether the state of charge of the main battery 12 tends to decrease or increase. Here, the fourth level is less than the third threshold.

The controller 101 transmits information indicating that the mode is changed in the sub battery mode when the level of charge of the main battery 12 changes to the fourth level (less than 5 V).

In this way, information about the state of charge of the main battery 12 is transmitted to the management center 31, so that the management center 31 can provide the service of informing a customer of the state of charge. If the driver has not started the engine 11 of the motorcycle 1 for a long period, the main battery 12 is exhausted by self discharge in some cases. In such a case, the management center 31 notifies the rider of the necessity of charging the main battery 12. The charging capability of the main battery 12 can be prevented from being lowered.

According to the present preferred embodiment, the anti-theft device driven with power supply from the main battery that is charged by the engine started by the engine starting motor has a sub battery, and a controller, and preferably a position measurement device, and a radio communication device.

The sub battery is charged by the main battery and supplies the anti-theft device with electric power when no power is supplied from the main battery to the anti-theft device. The controller stops the charging to the sub battery when the voltage supplied to the anti-theft device from the main battery is changed to less than the first threshold. The position measurement device measures the present position of the anti-theft device. The radio communication device reports the position information measured by the position measurement device to the management center by radio communication.

In this way, the voltage of the main battery 12 can be prevented from running down to such a low level that the engine starting motor cannot be activated, and therefore the startability of the engine can be secured. Furthermore, when the voltage level of the main battery 12 is not less than the first threshold, in other words, shortly after the engine is stopped, or when the engine is in operation, the sub battery 109 has been charged, so that the anti-theft device operates for a long period after the motorcycle 1 is stolen. Therefore, an anti-theft device capable of operating for a long period after the motorcycle is stolen while reducing the exhaustion of the main battery and securing the startability of the engine can be provided.

According to the present preferred embodiment, when the controller stops the charging to the sub battery and the level of voltage supplied from the main battery to the anti-theft device reaches at least the second threshold that is greater than the first threshold, the charging to the sub battery is resumed.

Furthermore, according to the present preferred embodiment, when the charging to the sub battery is carried out, and voltage supplied from the main battery to the anti-theft device attains a level that is not less than the first threshold and less than the second threshold, the controller continues to have the sub battery charged.

Below the first threshold, the voltage of the main battery is in a dropped state. Therefore, the charging is not resumed until the voltage of the main battery becomes at least the second threshold greater than the first threshold, so that sufficient time for charging the main battery can be secured. In this way, the startability of the engine can be improved. In addition, the voltage level in which charging is stopped because of reduction in voltage and the voltage level in which charging is resumed because of increase in voltage are set to different values, and therefore the charging can be prevented from switching frequently between stopping and resuming because of minute changes in the voltage of the main battery around the thresholds caused by fluctuations in the revolution of the engine.

Furthermore, according to the present preferred embodiment, the first threshold is the level of the predetermined voltage that allows the engine to start by the main battery.

In this way, the sub battery can be charged in such a range that the startability can be secured. Therefore, an anti-theft device capable of operating for a long period after the vehicle is stolen while securing the startability can be provided.

According to the present preferred embodiment, when voltage supplied from the main battery attains a level not less than the first threshold and less than the second threshold, the anti-theft device transmits first information indicating that the remaining capacity of the main battery is reduced to the management center using a radio communication device.

Furthermore, according to the present preferred embodiment, when the voltage supplied from the main battery attains a level not less than the third threshold and less than the first threshold, the anti-theft device transmits second information indicating the remaining capacity of the main battery is reduced to the management center using the radio communication device.

In this way, the rider can be aware of a drop in the voltage of the main battery. Therefore, the engine can be started to increase the voltage of the main battery to the second threshold or more. Therefore, the period in which the sub battery can be charged can be prolonged. As a result, an anti-theft device capable of operating for a long period after the vehicle is stolen while securing the startability of the engine can be provided.

According to the present preferred embodiment, the anti-theft device includes an input line used to input power from the main battery and a supply line used to supply power input by the input line to the engine control unit.

In this way, a criminal cannot drive away riding on the motorcycle 1 after removing the anti-theft device 10 from the motorcycle 1.

According to the present preferred embodiment, the anti-theft device according to the present invention is provided in the motorcycle. The motorcycle has a smaller size than an automobile. Therefore, the maximum capacity of the main battery of the motorcycle is smaller than the main battery of the automobile. Therefore, in the motorcycle, the voltage of the main battery is more likely to drop to a level less than the first threshold as the level of voltage that allows the engine to be started by the main battery, and the invention is more effectively applied.

While preferred embodiments of the present invention have been described above, it is to be understood that variations and modification will be apparent to those skilled in the art without departing the scope of the present invention. The scope of the present invention, therefore, is to be determined solely by the following claims.

## Claims

1. A vehicle (1) comprising an engine (11), a first battery (12) charged by the engine (11) and an anti-theft device (10) driven with power supplied from the first battery (12) that is charged by the engine (11) started by an engine starting motor (52), comprising:
a second battery (109) charged by the first battery (12) and supplying the anti-theft device (10) with electric power when no electric power is supplied from the first battery (12) to the anti-theft device (10); and
**characterized by**
an ECU (16) controlling driving of the engine (11), wherein electric power from the first battery is supplied to the ECU (16): and
the anti-theft device (10) further-comprising a controller (101) that stops charging to the second battery (109) when voltage supplied to the anti-theft device (10) from the first battery (12) is reduced to less than a first threshold.

2. The vehicle (10) according to claim 1, wherein the controller (101) resumes charging to the second battery (109) when the charging to the second battery (109) is stopped and the voltage supplied to the anti-theft device (10) from the first battery (12) increases to at least a second threshold that is greater than the first threshold.

3. The vehicle (10) according to claim 2, wherein the controller (101) continues to have the second battery (109) charged when the charging to the second battery (109) is carried out and voltage supplied from the first battery (12) to the anti-theft device (10) is dropped to the range of at least the first threshold and less than the second threshold.

4. The vehicle (10) according to any one of claims 1 to 3, wherein the first threshold is predetermined voltage that allows the engine (11) to be started by the first battery (12).

5. The vehicle (10) according to any one of claims 1 to 4, wherein the anti-theft device further comprises:
a position measurement device (104) that measures the present position of the anti-theft device (10).

6. The vehicle (10) according to claim 5, wherein the anti-theft device further comprises:
a radio communication device (107) used to report the positional information measured by the position measurement device (104) to a management center (31) by radio communication;

7. The vehicle (10) according to claim 6, wherein the controller (101) instructs the radio communication device (106) to transmit first information indicating that the voltage supplied from the first battery (12) is reduced to the management center (31) when the voltage supplied from the first battery (12) changes to the range of at least the first threshold and less than the second threshold.

8. The vehicle (10) according to claim 6 or 7, wherein the controller (101) instructs the radio communication device (106) to transmit second information indicating that the voltage supplied from the first battery (12) is reduced to the management center (31) when the voltage supplied from the first battery (12) changes to the range of at least a third threshold that is smaller than the first threshold and less than the first threshold.

9. The vehicle (1) according to any one of claims 1 to 8, wherein the vehicle (1) is a motorcycle.

## Patentansprüche

1. Fahrzeug (1), umfassend einen Motor (11), eine erste Batterie (12), die von dem Motor (11) geladen wird, und eine Diebstahlsicherung (10), die mit Strom von der ersten Batterie (12) betrieben wird, die von dem Motor (11) geladen wird, welcher von einem Anlassmotor (52) gestartet wird, umfassend:
eine zweite Batterie (109), die von der ersten Batterie (12) geladen wird und die Diebstahlsicherung (10) mit Strom versorgt, wenn kein Strom von der ersten Batterie (12) an die Diebstahlsicherung (10) geleitet wird; und
**gekennzeichnet durch**
ein elektronisches Steuergerät (16), das den Antrieb des Motors (11) steuert, wobei das elektronische Steuergerät (16) von der ersten Batterie mit Strom versorgt wird; und
die Diebstahlsicherung (10) des Weiteren eine Steuerung (101) umfasst, die das Laden der zweiten Batterie (109) stoppt, wenn eine Spannung, die von der ersten Batterie (12) an die Diebstahlsicherung (10) geliefert wird, auf weniger als einen ersten Schwellenwert sinkt.

2. Fahrzeug (10) nach Anspruch 1, wobei die Steuerung (101) das Laden der zweiten Batterie (109) wieder aufnimmt, wenn das Laden der zweiten Batterie (109) gestoppt wurde und die Spannung, die von der ersten Batterie (12) an die Diebstahlsicherung (10) geleitet wird, auf mindestens einen zweiten Schwellenwert ansteigt, der größer als der erste Schwellenwert ist.

3. Fahrzeug (10) nach Anspruch 2, wobei die Steuerung (101) das Laden der zweiten Batterie (109) fortsetzt, wenn das Laden der zweiten Batterie (109) ausgeführt wird und die Spannung, die von der ersten Batterie (10) an die Diebstahlsicherung (12) geleitet wird, auf den Bereich zwischen mindestens dem ersten Schwellenwert und weniger als dem zweiten Schwellenwert abfällt.

4. Fahrzeug (10) nach einem der Ansprüche 1 bis 3, wobei der erste Schwellenwert eine vorgegebene Spannung ist, die es zulässt, dass der Motor (11) von der ersten Batterie (12) gestartet wird.

5. Fahrzeug (10) nach einem der Ansprüche 1 bis 4, wobei die Diebstahlsicherung des Weiteren umfasst:
eine Positionsmessvorrichtung (104), welche die aktuelle Position der Diebstahlsicherung (10) misst.

6. Fahrzeug (10) nach Anspruch 5, wobei die Diebstahlsicherung des Weiteren umfasst:
eine Funkkommunikationsvorrichtung (107), die dazu verwendet wird, die von der Positionsmessvorrichtung (104) gemessenen Positionsinformationen mithilfe von Funkkommunikation an ein Managementzentrum (31) zu berichten.

7. Fahrzeug (10) nach Anspruch 6, wobei die Steuerung (101) die Funkkommunikationsvorrichtung (106) dazu anweist, erste Informationen, die anzeigen, dass die von der ersten Batterie (12) gelieferte Spannung reduziert ist, an das Managementzentrum (31) zu senden, wenn sich die von der ersten Batterie (12) gelieferte Spannung auf den Bereich ändert, der zwischen mindestens dem ersten Schwellenwert und weniger als dem zweiten Schwellenwert liegt.

8. Fahrzeug (10) nach Anspruch 6 oder 7, wobei die Steuerung (101) die Funkkommunikationsvorrichtung (106) dazu anweist, zweite Informationen, die anzeigen, dass die von der ersten Batterie (12) gelieferte Spannung reduziert ist, an das Managementzentrum (31) zu senden, wenn sich die von der ersten Batterie (12) gelieferte Spannung auf den Bereich von mindestens einem dritten Schwellenwert, der kleiner als der erste Schwellenwert ist, und weniger als dem ersten Schwellenwert ändert.

9. Fahrzeug (1) nach einem der Ansprüche 1 bis 8, wobei das Fahrzeug (1) ein Motorrad ist.

## Revendications

1. Véhicule (1) comprenant un moteur (11), une première batterie (12) chargée par le moteur (11) et un dispositif antivol (10) entraîné grâce à la puissance fournie par la première batterie (12) qui est chargée par le moteur (11) démarré par un moteur électrique démarreur de moteur (52), comprenant :
une deuxième batterie (109) chargée par la première batterie (12) et alimentant le dispositif antivol (10) en puissance électrique quand aucune puissance électrique n'est fournie par la première batterie (12) au dispositif antivol (10) ; et
**caractérisé par**
une unité de contrôle moteur ECU (16), soit Engine Control Unit, qui contrôle la commande du moteur (11), dans laquelle une puissance électrique est fournie par la première batterie à l'ECU (16) ; et
le dispositif antivol (10) comprenant en outre un contrôleur (101) qui arrête la charge de la deuxième batterie (109) quand la tension fournie au dispositif antivol (10) par la première batterie (12) est réduite à une valeur inférieure à un premier seuil.

2. Véhicule (10) selon la revendication 1, dans lequel le contrôleur (101) reprend le chargement de la deuxième batterie (109) quand le chargement de la deuxième batterie (109) est arrêté et la tension fournie au dispositif antivol (10) par la première batterie (12) augmente au moins jusqu'à un deuxième seuil qui est supérieur au premier seuil.

3. Véhicule (10) selon la revendication 2, dans lequel le contrôleur (101) continue à commander le chargement de la deuxième batterie (109) quand le chargement de la deuxième batterie (109) est effectué et la tension fournie par la première batterie (12) au dispositif antivol (10) chute dans une plage supérieure ou égale au premier seuil et inférieure au deuxième seuil.

4. Véhicule (10) selon l'une quelconque des revendications 1 à 3, dans lequel le premier seuil est une tension prédéterminée qui permet au moteur (11) d'être démarré par la première batterie (12).

5. Véhicule (10) selon l'une quelconque des revendications 1 à 4, dans lequel le dispositif antivol comprend en outre :
un dispositif de mesure de position (104) qui mesure la position actuelle du dispositif antivol (10).

6. Véhicule (10) selon la revendication 5, dans lequel le dispositif antivol comprend en outre :
un dispositif de radiocommunication (107) utilisé pour signaler l'information de position mesurée par le dispositif de mesure de position (104) à un centre de gestion (31) par radiocommunication.

7. Véhicule (10) selon la revendication 6, dans lequel le contrôleur (101) commande au dispositif de radiocommunication (106) de transmettre une première information qui indique au centre de gestion (31) que la tension fournie par la première batterie (12) est réduite quand la tension fournie par la première batterie (12) passe dans la plage supérieure ou égale au premier seuil et inférieure au deuxième seuil.

8. Véhicule (10) selon la revendication 6 ou 7, dans lequel le contrôleur (101) commande au dispositif de radiocommunication (106) de transmettre une deuxième information qui indique au centre de gestion (31) que la tension fournie par la première batterie (12) est réduite quand la tension fournie par la première batterie (12) passe dans la plage supérieure ou égale à un troisième seuil, qui est plus bas que le premier seuil, et inférieure au premier seuil.

9. Véhicule (1) selon l'une quelconque des revendications 1 à 8, dans lequel le véhicule (1) est une motocyclette.
